# FASCICULE DE BREVET EUROPEEN

(11) **EP 3 300 487 B1**
(45) Date de publication et mention de la délivrance du brevet: **22.05.2019**
(21) Numéro de dépôt: 16721460.0
(22) Date de dépôt: 13.04.2016
(51) Int. Cl.: B60R 16/027

(54) **CONTACTEUR TOURNANT POUR COLONNE DE DIRECTION DE VÉHICULE AUTOMOBILE**
DREHKONTAKTGEBER FÜR KRAFTFAHRZEUGLENKSÄULE
ROTARY CONTACTOR FOR A MOTOR VEHICLE STEERING COLUMN

(30) Priorité: 14.04.2015 FR 1553274
(43) Date de publication de la demande: 04.04.2018
(73) Titulaire: Valeo Comfort and Driving Assistance, 94046 Créteil Cedex (FR)
(72) Inventeur: TOUROUDE, Laurent, 94046 Créteil Cedex (FR)
(74) Mandataire: Delplanque, Arnaud
(86) Numéro de dépôt international: PCT/FR2016/000075
(87) Numéro de publication internationale: WO 2016/166428

(56) Documents cités:
- FR-A1- 2 985 101
- FR-A1- 3 007 707
- US-A- 5 674 082

## Description

La présente invention concerne un contacteur tournant pour colonne de direction de véhicule automobile.

Le nombre de fonctions à contrôler dans un véhicule automobile a beaucoup augmenté. Ces fonctions peuvent être commandées par des commutateurs situés sur et sous le volant. Ces commutateurs présentent un avantage en termes d'ergonomie et de sécurité, puisqu'ils sont disposés près des mains de l'utilisateur lorsque celui-ci conduit, et peuvent être actionnés sans que le conducteur ne quitte la route des yeux.

Pour réaliser les commutateurs sur et sous volant, il est connu d'utiliser des contacteurs tournants. Les contacteurs tournants permettent de relier électriquement un ou plusieurs dispositifs agencés au niveau du volant du véhicule à un circuit électrique principal du véhicule, par l'intermédiaire de moyens de transmission électriques. Les dispositifs peuvent consister par exemple en des contacteurs électriques, tels que celui de l'avertisseur sonore, ou en un dispositif de sécurité à coussin gonflable.

Les moyens de transmission électrique comportent à cet effet, au moins un câble plat flexible de connexion enroulé en spirale généralement avec une boucle de retournement, reçu entre deux parties coaxiales d'une cassette du contacteur, montées mobiles l'une par rapport à l'autre.

Une des parties est fixe, tandis que l'autre mobile, est destinée à être liée en rotation au volant du véhicule automobile. Les extrémités du câble plat flexible de connexion sont respectivement liées à la partie fixe et à la partie mobile, de manière à pouvoir s'enrouler ou se dérouler à l'intérieur de la cassette selon le sens de rotation du volant.

Le fond et/ou le couvercle de la cassette peuvent présenter des surépaisseurs régulièrement réparties sur lesquelles vient reposer la tranche du câble plat flexible. Ces surépaisseurs présentent une forme allongée s'étendant radialement sur une face principale de la cassette. La hauteur des surépaisseurs diminue de manière continue entre la crête et les bords. Ainsi, lorsque le câble se déplace, il prend appui sur la crête des surépaisseurs, ce qui permet de limiter les zones de contact entre le câble et la cassette, et donc le frottement du câble dans la cassette.

On connaît par exemple du document US5,674,082 un tel contacteur tournant.

Cependant, il peut arriver qu'au cours de l'enroulement/déroulement du câble plat flexible, les boucles de retournement des câbles entrent en contact avec les surépaisseurs dans une zone de pente « raide », entre la crête et les bords, ce qui peut générer du bruit.

L'invention a donc pour objectif de fournir un contacteur tournant dont le bruit généré par le déplacement du câble plat flexible est limité.

A cet effet, l'invention a pour objet un contacteur tournant pour colonne de direction de véhicule automobile comprenant :
- au moins un câble plat flexible de liaison électrique,
- une cassette apte à être montée sur la colonne de direction, comprenant :
   ∘ une partie fixe comprenant une paroi de forme générale cylindrique fixe,
   ∘ une partie mobile, mobile par rapport à la partie fixe, apte à être liée en rotation à la colonne de direction du véhicule, la partie mobile comprenant une paroi de forme générale cylindrique mobile,
   ∘ au moins une portion de face interne fixe ou mobile perpendiculaire à la paroi de forme générale cylindrique mobile et à la paroi de forme générale cylindrique fixe,
   ∘ une première extrémité du câble plat flexible étant fixée à la partie fixe et une deuxième extrémité du câble plat flexible étant fixée à la partie mobile, le câble plat flexible étant reçu dans un logement formé par la au moins une portion de face interne fixe ou mobile et les parois de forme générale cylindrique fixe et mobile, le câble plat flexible étant replié en formant une boucle de retournement de manière à pouvoir s'enrouler et se dérouler à l'intérieur du logement avec la rotation de la colonne de direction,
   ∘ la au moins une portion de face interne fixe et/ou mobile comprenant une pluralité de godrons en relief s'étendant à partir respectivement de la paroi de forme générale cylindrique fixe et/ou mobile, les godrons présentant une crête respective, sur lesquelles une tranche du câble plat flexible est destinée à venir prendre appui au cours de l'enroulement/déroulement du câble plat flexible,
   ∘ les godrons présentant une épaisseur diminuant de manière continue entre la crête et les bords du godron ainsi que le long de la crête en
   s'éloignant de la paroi de forme générale cylindrique fixe et/ou mobile, caractérisé en ce que la crête des godrons de la au moins une portion de face interne fixe et/ou mobile s'étend en s'écartant d'une direction radiale à l'axe de rotation de la colonne de direction de sorte que, dans au moins un sens de rotation de la partie mobile, la boucle de retournement entre en contact avec une extrémité du godron du côté convexe de la boucle de retournement.

L'épaisseur du godron augmente ou diminue ainsi corrélativement avec le point de contact entre le godron et la boucle de retournement du câble plat flexible. En suivant ainsi le mouvement du câble plat flexible au cours de son enroulement/déroulement dans le logement, on peut adoucir la pente du godron susceptible de rencontrer la boucle de retournement du câble plat flexible lorsque celui-ci s'enroule ou se déroule dans le logement. La pente du godron plus douce permet de limiter le bruit lors du déplacement du câble plat flexible.

Selon une ou plusieurs caractéristiques du contacteur, prise seule ou en combinaison :
- une portion de face interne fixe ou mobile comprenant une pluralité de godrons en relief est une portion de fond de la cassette,
- une portion de face interne fixe ou mobile comprenant une pluralité de godrons en relief est une portion de couvercle de la cassette,
- les godrons d'une même portion de face interne fixe et/ou mobile sont identiques et présentent une crête déviée du même côté de la direction radiale,
- les godrons d'une même portion de face interne fixe et/ou mobile sont régulièrement répartis,
- un fond ou un couvercle de la cassette est formé par une portion de face interne mobile de la partie mobile et par une portion de face interne fixe de la partie fixe,
- la crête des godrons de la portion de face interne fixe et de la portion de face interne mobile s'étend vers l'autre portion de face interne en s'écartant de la direction radiale,
- la crête des godrons s'écarte de la direction radiale du même côté de la direction radiale pour les portions de face interne fixe et mobile,
- la crête des godrons de la portion de face interne fixe et/ou mobile présente une forme courbée,
- la forme courbée de la crête des godrons s'inscrit dans une volute,
- la tangente de la courbe formée par la crête des godrons est toujours perpendiculaire à la tangente de la boucle de retournement au point de contact de la boucle de retournement avec le godron quand la boucle de retournement entre en contact avec le godron,
- la crête des godrons de la portion de face interne fixe et/ou mobile forme une droite,
- la crête des godrons forme un angle compris entre 40 et 70 degrés avec la direction radiale.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente des éléments d'un premier exemple de contacteur tournant pour colonne de direction de véhicule automobile,
- la figure 2 représente une vue schématique agrandie d'un premier exemple de godron,
- la figure 3 est une vue schématique explicative de la forme de la crête du premier exemple de godrons,
- la figure 4 représente une vue en perspective de la partie fixe d'une cassette d'un contacteur tournant selon la figure 1,
- la figure 5 représente un détail de la partie fixe de la figure 4,
- la figure 6 représente une vue en coupe de la partie fixe de la figure 5,
- la figure 7 représente des éléments d'un deuxième exemple de contacteur tournant.

Sur toutes les figures les éléments identiques portent les mêmes références.

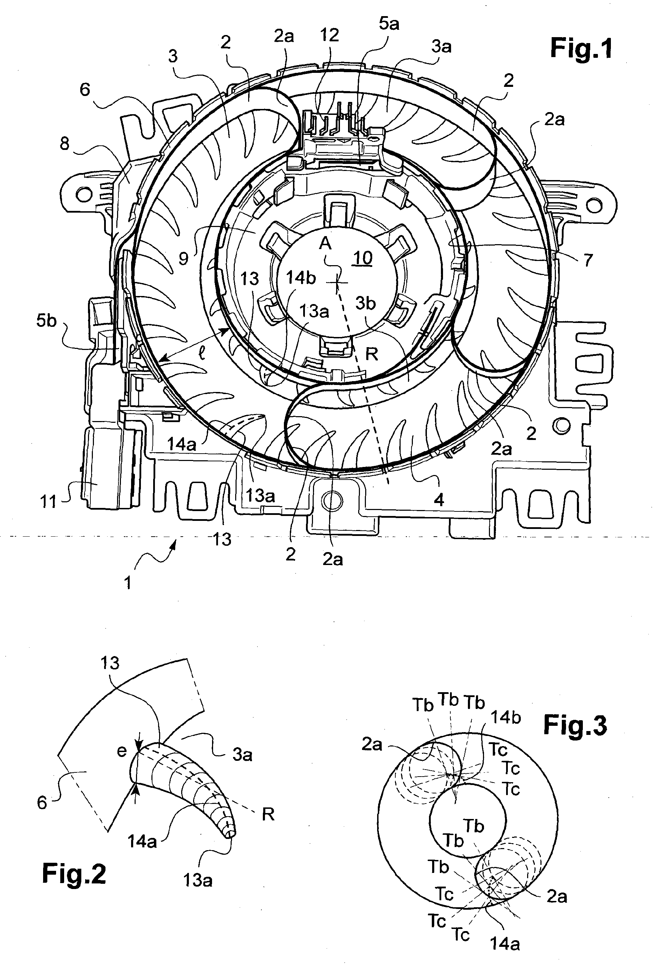

Sur la figure 1, on a représenté des éléments d'un premier exemple de contacteur tournant 1 pour colonne de direction de véhicule automobile.

Le contacteur tournant 1 comporte un ou plusieurs câble(s) plat(s) flexible(s) 2 et une cassette 4 définissant un logement pour le(s) câble(s) plat(s) flexible(s) 2. Dans l'exemple représenté sur la figure 1, le contacteur tournant 1 comporte quatre câbles plats flexibles 2 présentant chacun une longueur différente de celle des autres.

La cassette 4 est destinée à être montée sur la colonne de direction via un support de commutateurs (non représenté), destiné à être placé et solidarisé sous le volant. Le support de commutateurs comporte des commutateurs sous-volant, comme ceux qui commandent usuellement des fonctions telles que les clignotants, phares et essuie-glaces du véhicule, mais aussi un autoradio ou un régulateur de vitesse. Le contacteur tournant 1 assure ainsi par l'intermédiaire des câbles plats flexibles 2 des liaisons électriques pour commander par exemple ces fonctions à partir du volant et/ou des dispositifs agencés au niveau du volant, tel qu'un coussin gonflable de protection du conducteur.

Un câble plat flexible de connexion 2 comporte généralement une pluralité de pistes de conducteurs électriques. Il peut s'agir à titre d'exemple de pistes de courant faible, par exemple pour l'alimentation de l'éclairage. Les pistes de conducteurs sont enrobées d'un isolant électrique tel que du plastique souple.

Le logement comprend au moins une face interne 3 en forme de couronne, une paroi de forme générale cylindrique fixe 6 et une paroi de forme générale cylindrique mobile 7.

Les parois de forme générale cylindrique fixe et mobile 6, 7 peuvent présenter la forme d'un cylindre plein ou ajouré.

Les parois de forme générale cylindriques fixe 6 et mobile 7 sont perpendiculaires à la au moins une face interne 3 et sont raccordées à la au moins une face interne 3 respectivement à la périphérie externe et interne. La face interne 3 peut être un fond ou un couvercle de la cassette 4.

La cassette 4 comporte une partie fixe 8 et une partie mobile 9.

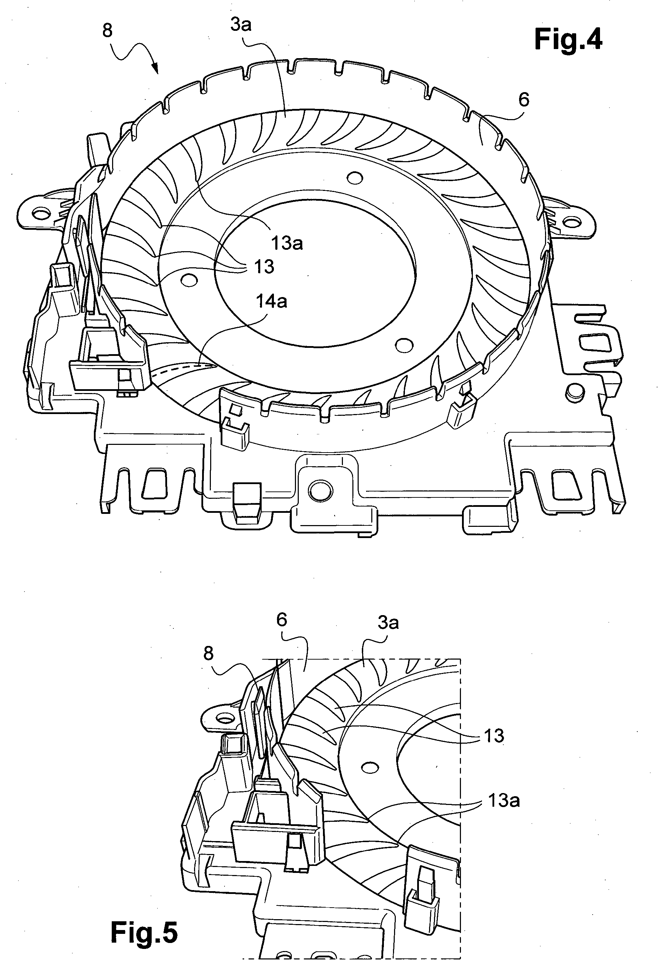

La partie fixe 8, mieux visible sur les figures 4, 5 et 6, comporte la paroi de forme générale cylindrique fixe 6 et, dans l'exemple représenté, une portion de fond fixe 3a. Cette partie fixe 8 peut être réalisée en une seule pièce.

La partie mobile 9 comprend la paroi de forme générale cylindrique mobile 7 et, dans l'exemple représenté, une portion de fond mobile 3b. Cette partie mobile 9 peut être réalisée en une seule pièce.

La partie mobile 9 est mobile par rapport à la partie fixe 8. Elle est apte à être liée en rotation à la colonne de direction du véhicule, par exemple via de moyens de raccord ménagés dans un trou central 10 de la partie mobile 9.

Les portions de fond fixe et mobile 3a, 3b forment le fond 3 du logement pour le(s) câble(s) plat(s) flexible(s) 2.

La partie fixe 8 peut également comporter une portion de couvercle fixe et la partie mobile 9 peut comporter une portion de couvercle mobile, les portions de couvercle fixe et mobile formant le couvercle du logement pour le(s) câble(s) plat(s) flexible(s) (non représenté).

Selon encore d'autres formes de réalisation non représentées, le fond du logement peut être entièrement formé par une portion de fond fixe ou entièrement formé par une portion de fond mobile. Egalement, le couvercle du logement peut être entièrement formé par une portion de couvercle fixe ou entièrement formé par une portion de couvercle mobile. On peut aussi prévoir une combinaison de ces réalisations. Par exemple, le fond est formé par une portion de fond mobile et par une portion de fond fixe et le couvercle est entièrement formé par une portion de couvercle fixe ou mobile.

Une première extrémité 5a du câble plat flexible 2 est fixée à la partie fixe 8 et une deuxième extrémité 5b du câble plat flexible 2 est fixée à la partie mobile 9, via des connecteurs respectifs 11, 12 aptes à coopérer avec des connecteurs complémentaires (non représentés) respectivement reliés aux dispositifs liés au volant du véhicule et au faisceau électrique du véhicule.

Les parois de forme générale cylindriques fixe et mobile 6, 7 sont coaxiales et concentriques. Les portions de face interne fixe et mobile 3a, 3b sont coaxiales et concentriques. La partie mobile 9 est agencée au centre de la partie fixe 8.

Le câble plat flexible 2 est reçu dans le logement entre les parois de forme générale cylindriques fixe 6 et mobile 7, en formant une boucle de retournement 2a, de manière à pouvoir s'enrouler et se dérouler à l'intérieur du logement avec la rotation de la colonne de direction. La boucle de retournement 2a forme sensiblement un demi-cercle, dont le diamètre est la largeur 1 du fond 3 du logement de la cassette 4. Lorsque la cassette 4 reçoit plusieurs câbles plats flexibles 2, les boucles de retournement 2a sont enroulées dans le logement dans le même sens. Les flancs du câble plat flexible 2 sont maintenus en contact contre respectivement les parois de forme générale cylindriques fixe 6 et mobile 7 par la force de réaction donnée par l'élasticité du câble plat flexible 2 replié.

Par exemple en référence à la figure 1, la rotation en sens antihoraire de la partie mobile 9 enroule le câble plat flexible 2 autour de la paroi de forme générale cylindrique mobile 7. La rotation en sens horaire déroule le câble plat flexible 2 sur la paroi de forme générale cylindrique fixe 6.

Au moins une portion de face interne fixe et/ou mobile 3a, 3b comprend une pluralité de godrons en relief 13, vingt-sept dans l'exemple représenté pour chacune des portion de face interne fixe et mobile 3a, 3b, par exemple régulièrement espacés sur la couronne du fond 3 et/ou du couvercle du logement.

Les godrons 13 s'étendent à partir respectivement des parois de forme générale cylindriques fixe 6 et/ou mobile 7, par exemple jusqu'au deux tiers de la portion de fond fixe ou mobile 3a, 3b (figure 1) ou, au maximum et le cas échéant, jusqu'au centre du demi-cercle formé par la boucle de retournement 2a du câble plat flexible 2 (voir Figure 3).

Les godrons 13 présentent une crête 14a, 14b respective, sur lesquelles au moins une tranche du câble plat flexible 2 est destinée à venir prendre appui au cours de l'enroulement/déroulement du câble plat flexible 2, de manière à légèrement surélever le câble plat flexible 2, par exemple d'environ un millimètre.

La crête 14a, 14b est formée par la ligne étroite au sommet du godron 13, celle-ci pouvant être saillante, sensiblement arrondie ou plate.

Mieux visible sur la figure 2, les godrons 13 présentent une épaisseur e diminuant de manière continue entre la crête 14a, 14b et les bords du godron 13, par exemple de manière symétrique de part et d'autre de la crête 14a, 14b. L'épaisseur e diminue également le long de la crête 14a, 14b en s'éloignant de la paroi de forme générale cylindrique fixe 6 ou mobile 7 jusqu'à une extrémité du godron 13a.

L'épaisseur e des godrons 13 diminue jusqu'à présenter une hauteur nulle par rapport à la portion de face interne fixe et/ou mobile (fond ou couvercle).

En outre, la crête 14a, 14b des godrons 13 de la portion de face interne fixe et/ou mobile 3a, 3b s'étend en s'écartant d'une direction radiale R, perpendiculaire à l'axe de rotation A de la colonne de direction.

Les godrons 13 d'une même portion de face interne fixe et/ou mobile 3a, 3b sont identiques et présentent une crête 14a, 14b déviée du même côté de la direction radiale R.

On peut prévoir que, seule la portion de face interne fixe 3a présente des godrons 13 dont la crête 14a s'étend en s'écartant de la direction radiale R. La portion de face interne mobile 3b peut comprendre une marche annulaire permettant de faire correspondre la hauteur de la portion de face interne mobile 3b sans godrons à la surface supérieure des godrons 13 en regard de la portion de face interne fixe 3a.

Ou inversement, on peut prévoir que seule la portion de face interne mobile 3b présente des godrons 13 dont la crête 14b s'étend vers la portion de face interne fixe 3a en s'écartant de la direction radiale R. La portion de face interne fixe 3a peut alors comprendre une marche annulaire permettant de faire correspondre la hauteur de la portion de face interne fixe 3a sans godrons à la surface supérieure des godrons 13 en regard de la portion de face interne mobile 3b.

Dans le cas où seulement la crête 14a, 14b des godrons 13 de l'une des portions de face interne 3a, 3b s'étend vers l'autre portion de face interne 3a, 3b en s'écartant de la direction radiale R, on préfère que ce soit la crête 14b des godrons de la portion de face interne 3a, 3b ayant la surface de face interne la plus importante, c'est-à-dire la portion de face interne fixe 3a dans l'exemple illustré de la figure 1.

Toutefois, afin de réduire au mieux les frottements, on peut aussi prévoir que la crête 14a, 14b des godrons 13 des deux portions de face interne fixe et mobile 3a, 3b s'étend vers l'autre portion de face interne 3a, 3b en s'écartant de la direction radiale R (figure 1).

Dans ce cas, la crête 14a, 14b des godrons 13 est déviée de la direction radiale R du même côté de la direction radiale R pour les portions de face interne fixe 3a et mobile 3b.

La crête 14a, 14b des godrons 13 de la portion de face interne fixe et/ou mobile 3a, 3b est déviée de sorte que, dans au moins un sens de rotation de la partie mobile 9, dans le sens de rotation horaire sur l'illustration de la figure 1, la boucle de retournement 2a entre en contact avec une extrémité 13a du godron 13 du côté convexe de la boucle de retournement 2a.

Selon un premier exemple de réalisation illustré sur les figures 1 à 6, la crête 14a, 14b des godrons 13 d'une portion de face interne fixe et/ou mobile 3a, 3b présente une forme courbée. La forme courbée de la crête 14a, 14b des godrons 13 s'inscrit par exemple dans une volute.

Dans le premier exemple représenté sur les figures 1 à 6, et mieux visible sur la figure 3, la crête 14a, 14b des godrons 13 présente une forme telle que la tangente de la courbe Tc formée par la crête 14a, 14b des godrons 13 soit toujours perpendiculaire à la tangente de la boucle de retournement Tb au point de contact de la boucle de retournement 2a avec le godron 13 quand la boucle de retournement 2a entre en contact avec le godron 13.

En fonctionnement, quand la partie mobile 9 tourne dans le sens horaire, la boucle de retournement 2a « descend » des godrons 13 de la partie mobile 9 et « monte » sur les godrons 13 de la partie fixe 8. Quand la partie mobile 9 tourne dans le sens antihoraire, la boucle de retournement 2a « descend » des godrons 13 de la partie fixe 8 et « monte » sur les godrons 13 de la partie mobile 9.

L'épaisseur e du godron 13 augmente ou diminue corrélativement avec le point de contact entre le godron 13 et la boucle de retournement 2a du câble plat flexible 2. En suivant ainsi le mouvement du câble plat flexible 2 au cours de son enroulement/déroulement dans le logement, on peut ainsi adoucir la pente du godron 13 susceptible de rencontrer la boucle de retournement 2a du câble plat flexible 2 lorsque celui-ci s'enroule ou se déroule dans le logement. La pente du godron 13 plus douce permet de limiter le bruit lors du déplacement du câble plat flexible 2.

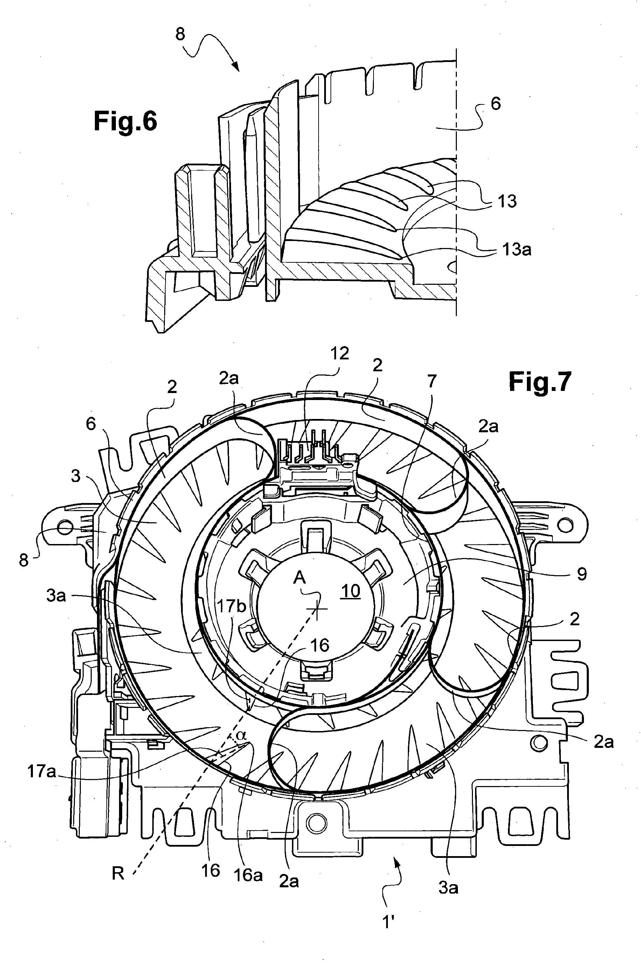

La figure 7 représente un deuxième exemple de réalisation du contacteur tournant 1'.

Le contacteur tournant 1' diffère de celui précédemment décrit par la forme de la crête 17a, 17b des godrons 16, qui est droite.

La crête 17a, 17b des godrons 16 forme par exemple un angle α compris entre 40 et 70 degrés avec la direction radiale R

Dans cet exemple également, la pente du godron 16 rencontrée par la boucle de retournement 2a est plus douce, ce qui permet de limiter le bruit lors du déplacement du câble plat flexible 2 dans le logement de la cassette 4.

## Revendications

1. Contacteur tournant (1 ; 1') pour colonne de direction de véhicule automobile comprenant :
- au moins un câble plat flexible (2) de liaison électrique,
- une cassette (4) apte à être montée sur la colonne de direction, comprenant :
∘ une partie fixe (8) comprenant une paroi de forme générale cylindrique fixe (6),
∘ une partie mobile (9), mobile par rapport à la partie fixe (8), apte à être liée en rotation à la colonne de direction du véhicule, la partie mobile (9) comprenant une paroi de forme générale cylindrique mobile (7),
∘ au moins une portion de face interne fixe ou mobile (3a, 3b) perpendiculaire à la paroi de forme générale cylindrique mobile (7) et à la paroi de forme générale cylindrique fixe (6),
∘ une première extrémité (5a) du câble plat flexible (2) étant fixée à la partie fixe (8) et une deuxième extrémité (5b) du câble plat flexible (2) étant fixée à la partie mobile (9), le câble plat flexible (2) étant reçu dans un logement formé par la au moins une portion de face interne fixe ou mobile (3a, 3b) et les parois de forme générale cylindrique fixe (6) et mobile (7), le câble plat flexible (2) étant replié en formant une boucle de retournement (2a) de manière à pouvoir s'enrouler et se dérouler à l'intérieur du logement avec la rotation de la colonne de direction,
∘ la au moins une portion de face interne fixe ou mobile (3a, 3b) comprenant une pluralité de godrons (13 ; 16) en relief s'étendant à partir respectivement de la paroi de forme générale cylindrique fixe et/ou mobile (6, 7), les godrons (13 ; 16) présentant une crête (14a, 14b ; 17a, 17b) respective, sur lesquelles une tranche du câble plat flexible (2) est destinée à venir prendre appui au cours de l'enroulement/déroulement du câble plat flexible (2),
∘ les godrons (13 ; 16) présentant une épaisseur (e) diminuant de manière continue entre la crête (14a, 14b ; 17a, 17b) et les bords du godron (13 ; 16) ainsi que le long de la crête (14a, 14b ; 17a, 17b) en s'éloignant de la paroi de forme générale cylindrique fixe et/ou mobile (6, 7),
**caractérisé en ce que** la crête (14a, 14b ; 17a, 17b) des godrons (13 ; 16) de la au moins une portion de face interne fixe et/ou mobile (3a, 3b) s'étend en s'écartant d'une direction radiale (R) à l'axe de rotation (A) de la colonne de direction de sorte que, dans au moins un sens de rotation de la partie mobile (9), la boucle de retournement (2a) entre en contact avec une extrémité (13a ; 16a) du godron (13 ; 16) du côté convexe de la boucle de retournement (2a).

2. Contacteur selon la revendication précédente, **caractérisé en ce qu'**une portion de face interne fixe ou mobile (3a, 3b) comprenant une pluralité de godrons (13 ; 16) en relief est une portion de fond (3) de la cassette (4).

3. Contacteur selon la revendication 1, **caractérisé en ce qu'**une portion de face interne fixe ou mobile (3a, 3b) comprenant une pluralité de godrons (13 ; 16) en relief est une portion de couvercle de la cassette (4).

4. Contacteur selon l'une des revendications précédentes, **caractérisé en ce que** les godrons (13 ; 16) d'une même portion de face interne fixe et/ou mobile (3a, 3b) sont identiques et présentent une crête (14a, 14b) déviée du même côté de la direction radiale (R).

5. Contacteur selon l'une des revendications précédentes, **caractérisé en ce que** les godrons (13 ; 16) d'une même portion de face interne fixe et/ou mobile (3a, 3b) sont régulièrement répartis.

6. Contacteur selon la revendication précédente, **caractérisé en ce qu'**un fond (3) ou un couvercle de la cassette (4) est formé par une portion de face interne mobile (3b) de la partie mobile (9) et par une portion de face interne fixe (3a) de la partie fixe (8).

7. Contacteur selon la revendication précédente, **caractérisé en ce que** la crête (14a, 14b ; 17a, 17b) des godrons (13 ; 16) de la portion de face interne fixe (3a) et de la portion de face interne mobile (3b) s'étend vers l'autre portion de face interne (3a, 3b) en s'écartant de la direction radiale (R).

8. Contacteur selon la revendication précédente, dans lequel la crête (14a, 14b ; 17a) des godrons (13 ; 16) s'écarte de la direction radiale (R) du même côté de la direction radiale (R) pour les portions de face interne fixe (3a) et mobile (3b).

9. Contacteur selon l'une des revendications précédentes, dans lequel la crête (14a, 14b) des godrons (13) de la portion de face interne fixe et/ou mobile (3a, 3b) présente une forme courbée.

10. Contacteur selon la revendication précédente, **caractérisé en ce que** la forme courbée de la crête (14a, 14b) des godrons (13) s'inscrit dans une volute.

11. Contacteur selon l'une des revendications 7 ou 8, **caractérisé en ce que** la tangente de la courbe (Tc) formée par la crête (14a, 14b) des godrons (13) est toujours perpendiculaire à la tangente de la boucle de retournement (Tb) au point de contact de la boucle de retournement (2a) avec le godron (13) quand la boucle de retournement (2a) entre en contact avec le godron (13).

12. Contacteur selon l'une des revendications 1 à 8, **caractérisé en ce que** la crête (17a, 17b) des godrons (16) de la portion de face interne fixe ou mobile (3a, 3b) forme une droite.

13. Contacteur selon la revendication précédente, **caractérisé en ce que** la crête (17a, 17b) des godrons (16) forme un angle (α) compris entre 40 et 70 degrés avec la direction radiale (R).

## Patentansprüche

1. Drehkontaktgeber (1; 1') für eine Kraftfahrzeuglenksäule, umfassend:
- mindestens ein flexibles Flachkabel (2) zum elektrischen Anschluss,
- eine Kassette (4), die zur Montage auf der Lenksäule geeignet ist, umfassend:
o einen festen Teil (8), der eine im Allgemeinen zylindrische feste Wand (6) umfasst,
o einen beweglichen Teil (9), der in Bezug auf den festen Teil (8) beweglich ist und drehbar mit der Lenksäule des Fahrzeugs verbunden werden kann, wobei der bewegliche Teil (9) eine im Allgemeinen zylindrische bewegliche Wand (7) umfasst,
o mindestens einen festen oder beweglichen Innenflächenteil (3a, 3b) senkrecht zu der im Allgemeinen zylindrischen beweglichen Wand (7) und der im Allgemeinen zylindrischen festen Wand (6),
o wobei ein erstes Ende (5a) des flexiblen Flachkabels (2) am festen Teil (8) befestigt ist und ein zweites Ende (5b) des flexiblen Flachkabels (2) am beweglichen Teil (9) befestigt ist, das flexible Flachkabel (2) in einem Gehäuse aufgenommen ist, das durch den mindestens einen festen oder beweglichen Innenflächenteil (3a, 3b) und die im Allgemeinen zylindrischen festen (6) und beweglichen (7) Wände gebildet wird, und das flexible Flachkabel (2) zu einer Wendeschleife (2a) umgebogen ist, sodass es innerhalb des Gehäuses mit der Drehung der Lenksäule auf- und abgewickelt werden kann,
∘ wobei der mindestens eine feste oder bewegliche Innenflächenteil (3a, 3b) eine Mehrzahl von vorstehenden Formteilen (13; 16) umfasst, die sich jeweils von der im Allgemeinen zylindrischen festen und/oder beweglichen Wand (6, 7) erstrecken, und die Formteile (13; 16) jeweils einen Kamm (14a, 14b; 17a, 17b) aufweisen, auf dem sich ein Stück des flexiblen Flachkabels (2) während des Auf-/Abwickelns des flexiblen Flachkabels (2) abstützen soll,
∘ wobei die Formteile (13; 16) eine Dicke (e) aufweisen, die kontinuierlich zwischen dem Kamm (14a, 14b; 17a, 17b) und den Rändern des Formteils (13; 16) sowie entlang des Kamms (14a, 14b; 17a, 17b) abnimmt, und zwar weg von der im Allgemeinen zylindrischen festen und/oder beweglichen Wand (6, 7),
**dadurch gekennzeichnet, dass** sich der Kamm (14a, 14b; 17a, 17b) der Formteile (13; 16) des mindestens einen festen und/oder beweglichen Innenflächenteils (3a, 3b) von einer zur Drehachse (A) der Lenksäule radialen Richtung (R) weg erstreckt, sodass in mindestens einer Drehrichtung des beweglichen Teils (9) die Wendeschleife (2a) mit einem Ende (13a; 16a) des Formteils (13; 16) auf der konvexen Seite der Wendeschleife (2a) in Kontakt kommt.

2. Kontaktgeber nach dem vorherigen Anspruch, **dadurch gekennzeichnet, dass** ein fester oder beweglicher Innenflächenteil (3a, 3b), der eine Mehrzahl von vorstehenden Formteilen (13; 16) umfasst, einen Teil des Bodens (3) der Kassette (4) darstellt.

3. Kontaktgeber nach Anspruch 1, **dadurch gekennzeichnet, dass** ein fester oder beweglicher Innenflächenteil (3a, 3b), der eine Mehrzahl von vorstehenden Formteilen (13; 16) umfasst, einen Teil des Deckels der Kassette (4) darstellt.

4. Kontaktgeber nach einem der vorherigen Ansprüche, **dadurch gekennzeichnet, dass** die Formteile (13; 16) eines gleichen festen und/oder beweglichen Innenflächenteils (3a, 3b) identisch sind und einen Kamm (14a, 14b) aufweisen, der auf der gleichen Seite aus der radialen Richtung (R) umgelenkt ist.

5. Kontaktgeber nach einem der vorherigen Ansprüche, **dadurch gekennzeichnet, dass** die Formteile (13; 16) eines gleichen festen und/oder beweglichen Innenflächenteils (3a, 3b) gleichmäßig verteilt sind.

6. Kontaktgeber nach dem vorherigen Anspruch, **dadurch gekennzeichnet, dass** ein Boden (3) oder ein Deckel der Kassette (4) durch einen beweglichen Innenflächenteil (3b) des beweglichen Teils (9) und durch einen festen Innenflächenteil (3a) des festen Teils (8) gebildet ist.

7. Kontaktgeber nach dem vorherigen Anspruch, **dadurch gekennzeichnet, dass** sich der Kamm (14a, 14b; 17a, 17b) der Formteile (13; 16) des festen Innenflächenteils (3a) und des beweglichen Innenflächenteils (3b) in Richtung des anderen Innenflächenteils (3a, 3b) abweichend von der radialen Richtung (R) erstreckt.

8. Kontaktgeber nach dem vorherigen Anspruch, wobei der Kamm (14a, 14b; 17a) der Formteile (13; 16) von der radialen Richtung (R) für den festen (3a) und den beweglichen (3b) Innenflächenteil auf der gleichen Seite der radialen Richtung (R) abweicht.

9. Kontaktgeber nach einem der vorherigen Ansprüche, wobei der Kamm (14a, 14b) der Formteile (13) des festen und/oder beweglichen Innenflächenteils (3a, 3b) eine gekrümmte Form aufweist.

10. Kontaktgeber nach dem vorherigen Anspruch, **dadurch gekennzeichnet, dass** sich die gekrümmte Form des Kamms (14a, 14b) der Formteile (13) in eine Spirale einfügt.

11. Kontaktgeber nach einem der Ansprüche 7 oder 8, **dadurch gekennzeichnet, dass** der Tangens der Kurve (Tc), die durch den Kamm (14a, 14b) der Formteile (13) gebildet wird, an der Berührungsstelle der Wendeschleife (2a) mit dem Formteil (13) immer senkrecht zum Tangens der Wendeschleife (Tb) steht, wenn die Wendeschleife (2a) mit dem Formteil (13) in Kontakt kommt.

12. Kontaktgeber nach einem der Ansprüche 1 bis 8, **dadurch gekennzeichnet, dass** der Kamm (17a, 17b) der Formteile (16) des festen oder beweglichen Innenflächenteils (3a, 3b) eine Gerade bildet.

13. Kontaktgeber nach dem vorherigen Anspruch, **dadurch gekennzeichnet, dass** der Kamm (17a, 17b) der Formteile (16) mit der radialen Richtung (R) einen Winkel (α) zwischen 40 und 70 Grad bildet.

## Claims

1. Rotary contactor (1, 1') for a motor vehicle steering column, comprising:
- at least one flat flexible electrical loop cable (2),
- a cassette (4) that can be mounted on the steering column, comprising:
∘ a fixed part (8) comprising a wall of generally fixed cylindrical form (6),
∘ a mobile part (9), mobile relative to the fixed part (8), that can be rotationally linked to the steering column of the vehicle, the mobile part (9) comprising a wall of generally mobile cylindrical form (7),
∘ at least one portion of fixed or mobile internal face (3a, 3b) at right angles to the wall of generally mobile cylindrical form (7) and to the wall of generally fixed cylindrical form (6),
∘ a first end (5a) of the flat flexible cable (2) being fixed to the fixed part (8) and a second end (5b) of the flat flexible cable (2) being fixed to the mobile part (9), the flat flexible cable (2) being received in a recess formed by the at least one portion of fixed or mobile internal face (3a, 3b) and the walls of generally fixed (6) and mobile (7) cylindrical form, the flat flexible cable (2) being folded to form a reversal loop (2a) so as to be able to be wound and unwound inside the recess with the rotation of the steering column,
∘ the at least one portion of fixed or mobile internal face (3a, 3b) comprising a plurality of relief pleats (13; 16) extending respectively from the wall of the generally fixed and/or mobile cylindrical form (6, 7), the pleats (13; 16) having a respective peak (14a, 14b; 17a, 17b), on which an edge of the flat flexible cable (2) is intended to come to bear during the winding/unwinding of the flat flexible cable (2),
∘ the pleats (13; 16) having a thickness (e) decreasing continuously between the peak (14a, 14b; 17a, 17b) and the edges of the pleat (13; 16) and along the peak (14a, 14b; 17a, 17b) moving away from the wall of generally fixed and/or mobile cylindrical form (6, 7),
**characterized in that** the peak (14a, 14b; 17a, 17b) of the pleats (13; 16) of the at least one portion of fixed and/or mobile internal face (3a, 3b) extends away in a radial direction (R) relative to the axis of rotation (A) from the steering column so that, in at least one direction of rotation of the mobile part (9), the reversal loop (2a) enters into contact with an end (13a; 16a) of the pleat (13; 16) on the convex side of the reversal loop (2a).

2. Contactor according to the preceding claim, **characterized in that** a portion of fixed or mobile internal face (3a, 3b) comprising a plurality of relief pleats (13; 16) is a bottom portion (3) of the cassette (4).

3. Contactor according to Claim 1, **characterized in that** a portion of fixed or mobile internal face (3a, 3b) comprising a plurality of relief pleats (13; 16) is a cover portion of the cassette (4).

4. Contactor according to one of the preceding claims, **characterized in that** the pleats (13; 16) of one and the same portion of fixed and/or mobile internal face (3a, 3b) are identical and have a peak (14a, 14b) deflected on the same side of the radial direction (R).

5. Contactor according to one of the preceding claims, **characterized in that** the pleats (13; 16) of one and the same portion of fixed and/or mobile internal face (3a, 3b) are evenly distributed.

6. Contactor according to the preceding claim, **characterized in that** a bottom (3) or a cover of the cassette (4) is formed by a portion of mobile internal face (3b) of the mobile part (9) and by a portion of fixed internal face (3a) of the fixed part (8).

7. Contactor according to the preceding claim, **characterized in that** the peak (14a, 14b; 17a, 17b) of the pleats (13; 16) of the portion of fixed internal face (3a) and of the portion of mobile internal face (3b) extends towards the other portion of internal face (3a, 3b) moving away from the radial direction (R).

8. Contactor according to the preceding claim, wherein the peak (14a, 14b; 17a) of the pleats (13; 16) moves away from the radial direction (R) on the same side of the radial direction (R) for the portions of fixed (3a) and mobile (3b) internal face.

9. Contactor according to one of the preceding claims, wherein the peak (14a, 14b) of the pleats (13) of the portion of fixed and/or mobile internal face (3a, 3b) has a curved form.

10. Contactor according to the preceding claim, **characterized in that** in the curved form of the peak (14a, 14b) of the pleats (13) is inscribed in a spiral.

11. Contactor according to one of Claims 7 and 8, **characterized in that** the tangent of the curve (Tc) formed by the peak (14a, 14b) of the pleats (13) is always at right angles to the tangent of the reversal loop (Tb) at the point of contact of the reversal loop (2a) with the pleat (13) when the reversal loop (2a) enters into contact with the pleat (13).

12. Contactor according to one of Claims 1 to 8, **characterized in that** the peak (17a, 17b) of the pleats (16) of the portion of fixed or mobile internal face (3a, 3b) forms a straight line.

13. Contactor according to the preceding claim, **characterized in that** the peak (17a, 17b) of the pleats (16) forms an angle (α) of between 40 and 70 degrees with the radial direction (R).
